# EUROPÄISCHE PATENTSCHRIFT

(11) **EP 2 216 491 B1**
(45) Veröffentlichungstag und Bekanntmachung des Hinweises auf die Patenterteilung: **30.05.2012**
(21) Anmeldenummer: 10001091.7
(22) Anmeldetag: 03.02.2010
(51) Int. Cl.: E06B 9/78, E06B 9/68, H02M 1/44

(54) **Antrieb für die motorische Verstellung einer Verdunkelungsvorrichtung wie eines Rolladens o. dgl.**
Drive for the motorised adjustment of a darkening device such as a roller blind or similar
Entraînement pour le réglage motorisé d'un dispositif d'assombrissement tel qu'un store ou analogue

(30) Priorität: 04.02.2009 DE 202009001375 U
(43) Veröffentlichungstag der Anmeldung: 11.08.2010
(73) Patentinhaber: ARCA Beteiligungen GmbH, 46414 Rhede (DE)
(72) Erfinder: Tepasse, Johannes, Dipl.-Ing., 46414 Rhede (DE)
(74) Vertreter: Gottschald, Jan

(56) Entgegenhaltungen:
- DE-A1-102007 013 562
- DE-U1- 20 001 483
- DE-U1-202005 002 747

## Beschreibung

Die Erfindung betrifft einen Antrieb für die motorische Verstellung einer Verdunkelungsvorrichtung wie eines Rolladens o. dgl. gemäß dem Oberbegriff von Anspruch 1.

Im Zuge der Komforterhöhung im Bereich der Rolladenbetätigung kommt dem in Rede stehenden Antrieb zunehmende Bedeutung zu. Ein solcher Antrieb ist regelmäßig mit einem Antriebsmotor sowie mit einem dem Antriebsmotor zugeordneten Steuerungsmodul ausgestattet.

Der in Rede stehende Antrieb ist in verschiedenen Bauarten bekannt. Grundsätzlich kann ein solcher Antrieb als Rohrmotor ausgestaltet sein, der in der Wickelwelle eines Rolladens im Rolladenkasten angeordnet ist. Eine andere Variante besteht darin, dass der Antrieb als motorisch betätigter Gurtwickler ausgestaltet ist. Ein solcher motorisch betätigter Gurtwickler findet in weitem Umfange Anwendung für die Nachrüstung, das heißt für den Austausch manuell betätigter Gurtwickler. Solche motorisch betätigten Gurtwickler sind als Aufputzgeräte, als Unterputzgeräte und als Universalgeräte bekannt. Im letztgenannten Fall ist mit demselben Gurtwickler sowohl eine Aufputz- als auch eine Unterputzmontage möglich.

Antriebe für die motorische Verstellung von Rolläden sind regelmäßig mit Automadkfunktionen ausgestattet. Eine dieser Automatikfunktionen besteht darin, dass der Gurtwickler zu vorbestimmten Zeiten automatisch betätigt wird. Hierfür ist der Gurtwickler mit einem Zeitmodul ausgestattet. Der bekannte Gurtwickler (DE 20 2005 002 747 U1), von dem die Erfindung ausgeht, weist ein Funkuhrmodul für den funkbasierten Empfang von Zeitinformationen zur Ermittlung der aktuellen Uhrzeit auf.

In Deutschland verbreitet die physikalisch-technische Bundesanstalt (PTB) ein Zeitsignal über den Langwellensender DCF 77 im Dauerbetrieb. Eine entsprechende Einrichtung auf internationaler Basis ist der TDF-Langwellensender in Allouis, Frankreich.

Eine Herausforderung bei der Auslegung des in Rede stehenden Antriebs ist die Bereitstellung einer Versorgungsspannung bei geringer Standby-Verlustleistung. Benötigt wird meist eine Gleichspannung vorbestimmter Höhe, die bei konventionellen Netzteilen über einen Transformator mit nachgeschaltetem Gleichrichter realisiert wird Die Verwendung solcher konventioneller Netzteile führt regelmäßig zu einer hohen Standby-Verlustleistung.

Es sind zwar grundsätzlich auch Schaltnetzteile bekannt, mit denen eine erhebliche Reduzierung der Standby-Verlustleistung erzielbar ist. Solche Schaltnetzteile sind hier aber nicht ohne weiteres anwendbar, da die durch den Schaltbetrieb der Schaltnetzteile verursachte elektromagnetische Störstrahlung einen sicheren DCF-Empfang praktisch unmöglich macht. Aber auch das Empfangen und/oder Senden anderer Steuerungsinformationen, beispielsweise von bzw. an eine Funkfernsteuerung, wird durch ein Schaltnetzteil erheblich gestört.

Der Erfindung liegt das Problem zugrunde, den bekannten Antrieb derart auszugestalten und weiterzubilden, dass die Standby-Verlustleistung reduziert wird, ohne dass das funkbasierte Empfangen und/oder Senden von Steuerungsinformationen gestört wird.

Das obige Problem wird bei einem Antrieb gemäß dem Oberbegriff von Anspruch 1 durch die Merkmale des kennzeichnenden Teils von Anspruch 1 gelöst

Wesentlich ist die Erkenntnis, dass ein Schaltnetzteil mit dem Vorteil einer geringen Standby-Verlustleistung Anwendung finden kann, sofern dafür gesorgt wird, dass während des Funkbetriebs kein oder ein reduzierter Scbaltbetrieb auftritt. Die Idee besteht also darin, das Schaltnetzteil während des funkbasierten Empfangens und/oder Sendens von Steuerungsinformationen zumindest zeitweise vom Betriebszustand aus in einen Haltezustand ohne Schaltbetrieb zu steuern. Mit "Betriebszustand" ist der Zustand gemeint, in dem das Schaltnetzteil zur Erzeugung der Versorgungsspannung im Schaltbetrieb arbeitet. Damit lassen sich auf einfache Weise durch den Schaltbetrieb verursachte Störungen des Funkbetriebs reduzieren oder sogar ausschließen.

Die vorschlagsgemäße Lösung bedeutet aber auch, dass das während des Funkbetriebs im Haltebetrieb befindliche Schaltnetzteil selbst die benötigte Versorgungsspannung nicht bereitstellen kann. Daher ist es vorgesehen, dass bei im Haltezustand befindlichem Schaltnetzteil ein entsprechender Energiespeicher vorhanden ist, der die Bereitstellung der Versorgungsspannung gewährleistet.

Bei der besonders bevorzugten Ausgestaltung gemäß Anspruch 9 ist es für den Empfang eines DCF-Signals vorgesehen, dass während der Pausenzeiten zwischen zwei Datenimpulsen eine kurzzeitige Überführung des Schaltnetzteils vom Haltezustand in den Betriebszustand erfolgt, um den obigen Energiespeicher nachzuladen. Durch dieses in relativ kurzen Abständen vorgesehene Nachladen des Energiespeichers kann dieser entsprechend klein dimensioniert werden.

Im Folgenden wird die Erfindung anhand einer lediglich ein Ausführungsbeispiel darstellenden Zeichnung näher erläutert. In der Zeichnung zeigt
- Fig. 1: einen vorschlagsgemäßen Antrieb in einer perspektivischen An- sicht,

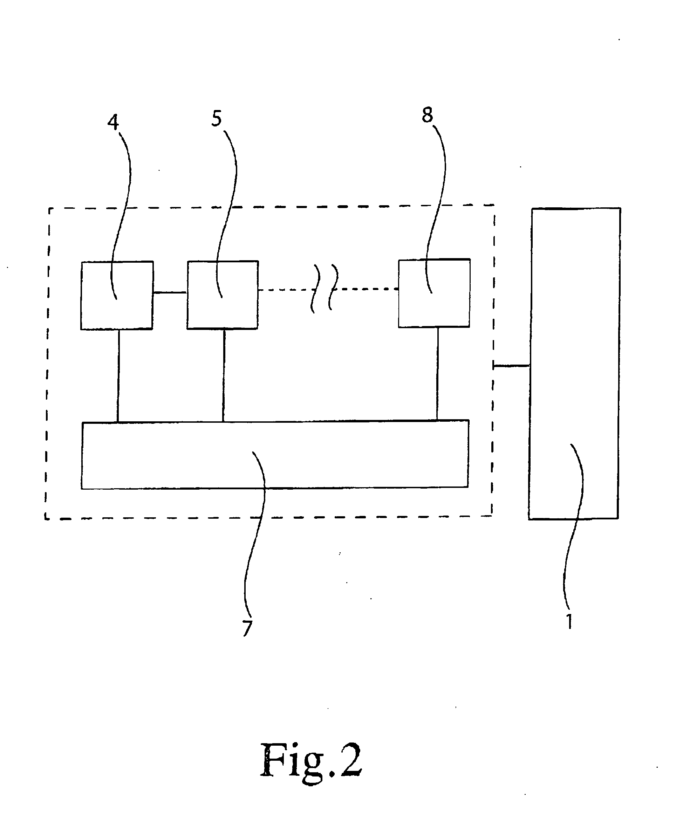

- Fig. 2: den vorschlagsgemäßen Antrieb gemäß Fig. 1 in einem Block- schalbild und
- Fig. 3: den zeitlichen Verlauf einiger für die Funktion des Antriebs rele- vanten Signale.

Der in der Zeichnung dargestellte Antrieb ist bestimmt für die motorische Verstellung einer Verdunkelungsvorrichtung wie eines Rolladens, einer Jalousie, einer Markise o. dgl.. Andere Anwendungsbeispiele sind denkbar.

Der in der Zeichnung dargestellte Antrieb ist ferner nach Art eines Gurtwicklers ausgestaltet. Einzelheiten zum Aufbau dieses Gurtwicklers lassen sich dem deutschen Gebrauchsmuster DE 297 22 936 U1 entnehmen, das auf die Ammelderin zurückgeht und das hiermit in vollem Umfange zum Gegenstand dieser Anmeldung gemacht wird.

Die folgenden Ausführungen sind zwar auf einen Gurtwickler gerichtet. Sie gelten aber voll umfänglich auch für andere Bauformen, insbesondere für Rohrmotoren o. dgl..

Der als Gurtwickler ausgestaltete Antrieb ist mit einem in der Zeichnung nur schematisch dargestellten Antriebsmotor 1 ausgestattet, der hier eine Haspel 2 zum Aufwickeln eines Gurtbandes 3 aufweist.

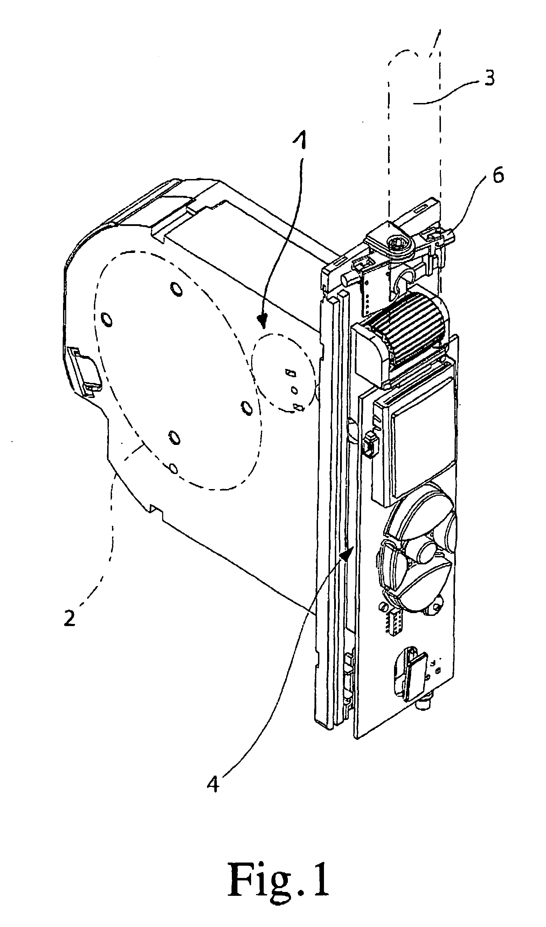

Dem Antriebsmotor 1 ist ein Steuerungsmodul 4 zugeordnet, das im Wesentlichen der Bewegungssteuerung dient. Das Steuerungsmodul 4 ist hier an der Bedienseite des Antriebs vorgesehen. Der Antrieb ist ferner mit einem Funkmodul 5 zum funkbasierten Empfangen und/oder Senden von Steuerungainformationen ausgestattet. Das Funkmodul 5 weist regelmäßig eine Antenne 6 auf, die in Fig. 1 zu erkennen ist.

Der Antrieb ist auch mit einem Netzteil 7 zur Bereitstellung einer elektrischen Versorgungsspannung ausgestattet. Das Netzteil 7 dient der elektrischen Versorgung nicht nur des Antriebsmotores 1, sondern auch des Steuerungsmoduls 4 und des Funkmoduls 5.

Wesentlich ist nun, dass das Netzmodul 7 als Schaltnetzteil ausgestaltet ist. Mit einem solchen Schaltnetzteil lassen sich zwar ein hoher Wirkungsgrad und eine geringe Standby-Verlustleistung realisieren. Allerdings ist ein solches Schaltnetzteil durch die hohen Schaltfrequenzen auch ein Eneuger hochfrequenter Störstrahlung, die den Funkbetrieb, wie oben erläutert, stört. Daher ist es vorschlagsgemäß vorgesehen, dass das Steuerungsmodul 4 das Schaltnetzteil 7 während des funkbasierten Empfangens und/oder Sendens von Steuerungsinformationen zumindest zeitweise von einem Betriebszustand in einen Haltezustand ohne Schaltbetrieb steuert. Damit ist es möglich, durch den Schaltbetrieb verursachte Störungen des Funkbetriebs zu reduzieren oder sogar auszuschließen. Letztlich wird der Schaltbetrieb für den Funkbetrieb kurzzeitig unterbrochen.

Die vorschlagsgemäße Lösung lässt sich auf alle möglichen Funkmodule eines Antriebs anwenden. Beispielsweise kann es vorgesehen sein, dass das Funkmodul 5 auf die funkbasierte Kommunikation mit einer Fuztkiernbedienung und/oder mit dem Funkmodul eines weiteren Antriebs hin ausgelegt ist. Mit einer obigen Funkfembedienung lässt sich ein Rolladen oder dergleichen komfortabel motorisch verstellen. Die Sicherheitsanforderungen bei einer solchen motorischen Verstellung sind hoch, was entsprechende Anforderungen an die Funkübertragung stellt. Die vorschlagsgemäße Lösung ist von entsprechend sicberheitsrelevanter Bedeutung.

Hier und vorzugsweise kommt dem Funkmodul 5 aber eine ganz andere Funktion zu. Das Funkmodul 5 ist nämlich als Funkuhrmodul für den funkbasierten Empfang von Zeitinformationen zur Ermittlung der aktuellen Uhrzeit ausgestaltet. Im Einzelnen ist das Funkmodul 5 hier als DCF-Modul für den Empfang eines DCF-Signals ausgestaltet. Die Ermittlung der aktuellen Uhrzeit mittels des Empfangs von DCF-Signalen wurde weiter oben schon angesprochen.

Um sicherzustellen, dass auch bei im Haltezustand befindlichem Schaltnetzteil 7 die elektrische Versorgung von Antriebsmotor, Steuerungsmodul und Funkmodul gewährleistet ist, weist der Antrieb einen Energiespeicher 8 auf, der hier und vorzugsweise als Kondensator ausgestaltet ist. Grundsätzlich ist hier auch die Verwendung eines Akkumulators denkbar.

Um ein Verstimmen des Funkmoduls 5, insbesondere des DCF-Empfängers, weitgehend ausschließen zu können, ist es in weiter bevorzugter Ausgestaltung vorgesehen, dass das Funkmodul 5 mittels des Steuerungsmoduls 4 derart deaktivierbar ist, dass im deaktivierten Zustand der Schaltbetrieb des Schaltnetzteils 7 keine Auswirkungen auf das Funkmodul 5 hat. Im Einzelnen ist es vorzugsweise vorgesehen, dass ein für den Funkbetrieb vorgesehener HF-Schwingkreis des Funkmoduls 5 bei im deaktivierten Zustand befindlichen Funkmodul 5 von seiner Ansteuerschaltung, insbesondere von einem zugeordneten Schwingkreisverstärker, entkoppelt ist Dies lässt sich einfach dadurch erreichen, dass der zugeordnete Schwingkreisverstärker auf einen festen Ausgangswert festgesetzt, also gewissermaßen "eingefroren" wird.

Vorzugsweise ist es nun so, dass das Steuerungsmodul 4 das Funkmodul 5 ausschließlich bei im Haltezustand befindlichem Schaltnetzteil 7 aktiviert. Damit ist sichergestellt, dass durch das Schaltnetzteil 7 bedingte Störstrahlung nicht zu ungewünschten Schwingungen im HF-Schwingkreis des Funkmoduls 5 führt.

In der Regel setzen sich die zu empfangenden und gegebenenfalls zu sendenden Steuerungsinformationen aus einer Anzahl von Steuerungsdaten zusammen, die mit einer Anzahl entsprechender Steuerungssignale übertragen werden. Das Funkmodul 5 empfängt bzw. sendet gegebenenfalls in Verbindung mit dem Steuerungsmodul 4 die Steuerungsinformationen in Empfangs- und/oder Sendezyklen, wobei innerhalb eines Zyklus regelmäßig mindestens eine Pausenzeit 10 ohne Datenübertragung vorgesehen ist. Bei einer bimären Datenübertragung kann es beispielsweise sein, dass nach jedem Datenbit eine entsprechende Pausenzeit 10 vorliegt, wie weiter unten noch erläutert wird.

Vorzugsweise steuert das Steuerungsmodul 4 das Schaltnetzteil 7 während der Pausenzeit 10 bzw. während der Pausenzeiten 10 kurzzeitig in den Betriebszustand, um die elektrische Versorgung des Antriebs sicherzustellen. In besonders bevorzugter Ausgestaltung lädt das im Betriebszustand befindliche Schaltnetzteil 7 den Energiespeicher 8 während der Pausenzeit 10 entsprechend nach.

Das obige Nachladen des Energiespeichers 8 währen der Pausenzeiten 10 lässt sich beim Empfang eines DCF-Signals besonders vorteilhaft umsetzen. Das DCF-Signal besteht aus einem Trägersignal mit einer Anzahl von im Sekundentakt aufmodulierten, binären Datenimpulsen 11, die in einem obigen Empfangszyklus 9 empfangbar sind. Zwischen zwei Datenimpulsen 11 ist eine Pausenzeit 10 von etwa 0,8 s vorgesehen. Um das Nachladen des Energiespeichers 8 zu erlauben, steuert das Steuerungsmodul 4 das Schaltnetzteil 7 während des Empfangszyklus 9 zumindest über einen Teil der Pausenzeit 10 vom Haltezustand in den Betriebszustand, und im übrigen in den Haltezustand. Wie oben erläutert, lädt das während der Pausenzeit 10 im Betriebszustand befindliche Schaltnetzteil 7 den Energiespeicher 8 entsprechend nach.

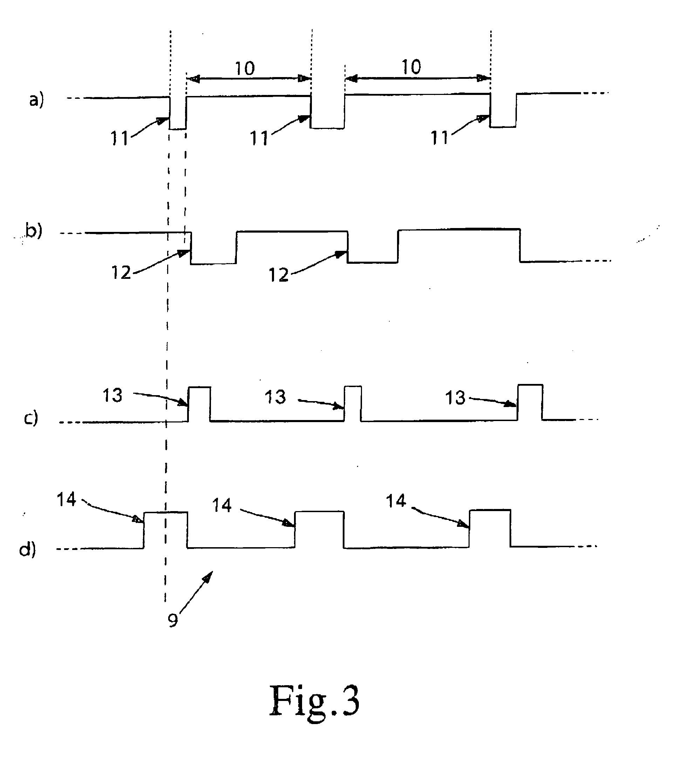

Der Darstellung in Fig. 3 ist ein Ausschnitt aus einem DCF-Empfangszyklus zu entnehmen. Signal a) zeigt das demodulierte DCF-Signal. Zu erkennen ist der rechteckförmige Datenimpuls 11, dessen Breite Aufschluss über den binären Wert der empfangenen Daten gibt. Aus dieser Darstellung wird deutlich, dass jedem Datenimpuls 11 eine Pausenzeit 10 folgt, deren Länge wie erläutert bei etwa 0,8 s liegt.

Das Signal b) zeigt die Aktivierung bzw. Deaktivierung des Funkmoduls 5 durch das Steuerungsmodul 4. Durch eine Absenkung des Signals wird die Deaktivierung des Funkmoduls 5 bewirkt. Dies ist durch die Deaktivierungsimpulse 12 gezeigt. Es lässt sich einer Zusammenschau der Signale a) und b) entnehmen, dass die positive Flanke des DCF-Signals die Deaktivierung des Funkmoduls 5 bewirkt, wobei die Deaktivierung in der Zeichnung scbaltungstechnisch bedingt geringfügig versetzt erfolgt. Die Breite des Deaktivierungsimpulses 12 beträgt hier und vorzugsweise etwa 350 ms.

Die obige positive Flanke des DCF-Signals bewirkt außerdem eine kurzzeitige Überführung des Schaltnetzteils 7 in den Betriebszustand, während dessen, wie oben erläutert, der Energiespeicher 8 nachgeladen wird.

Die obige Vorgehensweise hat verschiedene Vorteile. Zunächst erfolgt die Überführung des Schaltnetzteils 7 in den Betriebszustand nach dem Empfangen des Datenimpulses 11 des DCF-Signals, also während der Pausenzeit 10. Während dieser Pausenzeit 10 kann der Empfang von Daten ja nicht gestört werden. Von besonderem Vorteil ist allerdings die Tatsache, dass gleichzeitig mit der Überführung des Schaltnetzteils 7 in den Betriebszustand das Funkmodul 5 deaktiviert wird. Damit wird erreicht, dass ein Verstimmen des Schwingkreises des DCF-Empfängers durch die Störstrahlung des Schaltnetzteils 7 nicht auftritt.

Um eine weitere Sicherheit gegen Störungen zu gewährleisten, ist es weiter vorzugsweise so, dass der Deaktivierungsimpuls 12 länger andauert als die kurzzeitige Überführung des Schaltnetzteils 7 in den Betriebszustand. Damit ist sichergestellt, dass auch Nachschwingeffekte nach der Überführung des Schaltnetzteils 7 in den Haltezustand keine Auswirkungen auf das Funkmodul 5 haben können.

Eine weitere Maßnahme zur Unterdrückung von Störeinflüssen zeigt schließlich das Signal d). Dieses Signal zeigt in Leseimpulsen 13 die Zeitbereiche, während derer überhaupt nur ein Auslesen des DCF-Signals erfolgt. Damit sind praktisch alle zeitlichen Bereiche, in denen kein Datenimpuls 11 auftreten kann, ausgeblendet. Störeinflüsse außerhalb der Leseimpulse 13 werden also nicht weiter berücksichtigt.

Schließlich darf noch darauf hingewiesen werden, dass zahlreiche Möglichkeiten denkbar sind, das Schaltnetzteil 7 vom Betriebszustand in den Haltezustand zu überführen. Die einfachste Variante besteht schlicht darin, das Schaltnetzteil 7 auszuschalten. Eine andere Variante macht sich die Tatsache zunutze, dass ein Schaltnetzteil 7 regelmäßig mit einem Regeleingang zum Nachregeln der Ausgangsspannung ausgestattet ist. Mit einer entsprechenden Ansteuerung dieses Regeleingangs lässt sich erreichen, dass der Schaltbetrieb unterbrochen wird. Gegenüber dem Schaltnetzteil 7 wird dabei gewissermaßen der ausgeregelte Zustand simuliert. Dies ist eine besonders elegante Lösung zur Überführung des Schaltnetzteil 7 in den Haltezustand.

Es wurde schon darauf hingewiesen, dass der Antrieb in unterschiedlichen Bauformen vorliegen kann. Als besonders bevorzugte Bauformen darf auf die Bauform eines Gurtwicklers und auf die Bauform eines Rohrmotors hingewiesen werden.

## Patentansprüche

1. Antrieb für die motorische Verstellung einer Verdunkelungsvorrichtung wie eines Rolladens o. dgl., mit einem Antriebsmotor (1), einem dem Antriebsmotor (1) zugeordneten Steuerungsmodul (4), einem Funkmodul (5) zum funkbasierten Empfangen und/oder Senden von Steuerungsinformationen und einem Netzteil (7) zur Bereitstellung einer elektrischen Versorgungsspannung,
**dadurch gekennzeichnet,**
**dass** das Netzteil (7) als Schaltnetzteil ausgestaltet ist und dass das Steuerungsmodul (4) das Schaltnetzteil (7) während des funkbasierten Empfangens und/oder Sendens von Steuerungsinformationen zumindest zeitweise vom Betriebszustand in einen Haltezustand ohne Schaltbetrieb steuert, um durch den Schaltbetrieb verursachte Störungen des Funkbetriebs zu reduzieren oder auszuschließen und dass bei im Haltezustand befindlichem Schaltnetzteil (7) ein Energiespeicher (8), insbesondere ein Kondensator oder ein Akkumulator, die Bereitstellung der Versorgungsspannung gewährleistet.

2. Antrieb nach Anspruch 1, **dadurch gekennzeichnet, dass** das Funkmodul (5) auf die funkbasierte Kommunikation mit einer Funkfembedienung und/oder mit dem Funkmodul einer weiteren Antriebsanordnung hin ausgelegt ist.

3. Antrieb nach Anspruch 1 oder 2, **dadurch gekennzeichnet, dass** das Funkmodul (5) als Funkuhrmodul für den funkbasierten Empfang von Zeitinformationen zur Ermittlung der aktuellen Uhrzeit ausgestaltet ist.

4. Antrieb nach Anspruch 3, **dadurch gekennzeichnet, dass** das Funkmodul (5) als DCF-Modul für den Empfang eines DCF-Signals ausgestaltet ist.

5. Antrieb nach einem der vorhergehenden Ansprüche, **dadurch gekennzeichnet, dass** das Funkmodul (5) mittels des Steuerungsmoduls (4) derart deaktivierbar ist, dass im deaktivierten Zustand der Schaltbetrieb im Wesentlichen keine Auswirkungen auf das Funkmodul (5) hat, vorzugsweise, dass ein für den Funkbetrieb vorgesehener HF-Schwingkreis des Funkmoduls (5) bei im deaktivierten Zustand befindlichem Funkmodul (5) von seiner Ansteuerschaltung entkoppelt ist.

6. Antrieb nach Anspruch 5, **dadurch gekennzeichnet, dass** das Steuerungsmodul (4) das Funkmodul (5) ausschließlich bei im Haltezustand befindlichem Schaltnetzteil (7) aktiviert und im übrigen deaktiviert.

7. Antrieb nach einem der vorhergehenden Ansprüche, **dadurch gekennzeichnet, dass** das Funkmodul (5) ggf. in Verbindung mit dem Steuerungsmodul (4) die Steuerungsinformationen in Empfangs- und/oder Sendezyklen (9) empfängt bzw. sendet, dass innerhalb eines Zyklus (9) mindestens eine Pausenzeit (10) ohne Datenübertragung vorgesehen ist und dass das Steuerungsmodul (4) das Schaltnetzteil (7) während der Pausenzeit (10) kurzzeitig in den Betriebszustand steuert, vorzugsweise, dass das im Betriebszustand befindliche Schaltnetzteil (7) den Energiespeicher (9) während der Pausenzeit (10) entsprechend nachlädt.

8. Antrieb nach Anspruch 4 und ggf. nach einem der Ansprüche 5 bis 7, wobei das DCF-Signal ein Trägersignal mit einer Anzahl von im Sekundentakt aufmodulierten, binären Datenimpulsen (11) aufweist, die in einem Empfangszyklus (9) empfangbar sind, wobei zwischen zwei Datenimpulsen (11) eine Pausenzeit (10) vorgesehen ist, **dadurch gekennzeichnet, dass** das Steuerungsmodul (4) das Schaltnetzteil (7) während des Empfangszyklus (9) zumindest über einen Teil der Pausenzeit (10) vom Haltezustand in den Betriebszustand und im übrigen in den Haltezustand steuert.

9. Antrieb nach Anspruch 8, **dadurch gekennzeichnet, dass** das während der Pausenzeit (10) im Betriebszustand befindliche Schaltnetzteil (7) den Energiespeicher (8) nachlädt.

10. Antrieb nach einem der vorhergehenden Ansprüche, **dadurch gekennzeichnet, dass** der Antrieb als Gurtwickler zum Aufwickeln des Gurtbandes eines Rolladens oder als Rohrmotor für den Einbau in die Wickelwelle eines Rolladens ausgestaltet ist.

## Claims

1. Drive for the motorized adjustment of a shading apparatus, such as a roller blind or the like, having a drive motor (1), a control module (4) which is associated with the drive motor (1), a radio module (5) for radio-based reception and/or transmission of control information, and a power supply unit (7) for providing an electrical supply voltage,
**characterized**
**in that** the power supply unit (7) is designed as a switched-mode power supply unit, and in that the control module (4) switches the switched-mode power supply unit (7) at least temporarily from the operating state to a holding state without switching operation during the radio-based reception and/or transmission of control information in order to reduce or prevent interference in the radio operation caused by the switching operation, and in that when the switched-mode power supply unit (7) is in the holding state, an energy storage means (8), in particular a capacitor or a rechargeable battery, ensures the provision of the supply voltage.

2. Drive according to Claim 1, **characterized in that** the radio module (5) is designed for radio-based communication with a radio remote-control means and/or with the radio module of a further drive arrangement.

3. Drive according to claim 1 or 2, **characterized in that** the radio module (5) is designed as a radio clock module for the radio-based reception of time information for ascertaining the current time.

4. Drive according to Claim 3, **characterized in that** the radio module (5) is designed as a DCF module for the reception of a DCF signal.

5. Drive according to one of the preceding claims, **characterized in that** the radio module (5) can be deactivated by means of the control module (4) in such a way that the switching operation does not have any substantial effect on the radio module (5) in the deactivated state, preferably that an RF resonant circuit of the radio module (5) which is provided for radio operation is decoupled from its actuation circuit when the radio module (5) is in the deactivated state.

6. Drive according to Claim 5, **characterized in that** the control module (4) activates the radio module (5) solely when the switched-mode power supply unit (7) is in the holding state, and otherwise deactivates the said radio module.

7. Drive according to one of the preceding claims, **characterized in that** the radio module (5), possibly in conjunction with the control module (4), receives and, respectively, transmits the control information in reception and/or transmission cycles (9), **in that** at least one idle time (10) without data transmission is provided within one cycle (9), and **in that** the control module (4) switches the switched-mode power supply unit (7) briefly to the operating state during the idle time (10), preferably **in that** the switched-mode power supply unit (7) which is in the operating state accordingly recharges the energy storage means (9) during the idle time (10).

8. Drive according to Claim 4 and possibly according to one of Claims 5 to 7, wherein the DCF signal has a carrier signal with a number of binary data pulses (11) which are modulated every second and which can be received in a reception cycle (9), wherein an idle time (10) is provided between two data pulses (11), **characterized in that** the control module (4) switches the switched-mode power supply unit (7) from the holding state to the operating state during the reception cycle (9) at least over a portion of the idle time (10), and otherwise switches said switched-mode power supply unit to the holding state.

9. Drive according to Claim 8, **characterized in that** the switched-mode power supply unit (7) which is in the operating state during the idle time (10) recharges the energy storage means (8).

10. Drive according to one of the preceding claims, **characterized in that** the drive is designed as a strap winder for winding the strap of a roller blind or as a tubular motor for installation into the winding shaft of a roller blind.

## Revendications

1. Mécanisme d'entraînement pour le positionnement motorisé d'un dispositif d'obscurcissement tel qu'un volet roulant ou similaire, comprenant un moteur d'entraînement (1), un module de commande (4) associé au moteur d'entraînement (1), un module radioélectrique (5) pour la réception et/ou l'émission par voie radioélectrique d'informations de commande et un bloc secteur (7) pour la mise à disposition d'une tension d'alimentation électrique,
**caractérisé en ce**
**que** le bloc secteur (7) est réalisé sous la forme d'une alimentation à découpage et en ce que le module de commande (4) commande l'alimentation à découpage (7) pendant la réception et/ou l'émission par voie radioélectrique d'informations de commande au moins temporairement de l'état opérationnel dans un état de veille sans fonctionnement du découpage afin de réduire ou d'exclure les perturbations du fonctionnement radioélectrique provoquées par le fonctionnement du découpage et en ce que lorsque l'alimentation à découpage (7) se trouve à l'état de veille, un accumulateur d'énergie (8), notamment un condensateur ou un accumulateur garantit la mise à disposition de la tension d'alimentation.

2. Mécanisme d'entraînement selon la revendication 1, **caractérisé en ce que** le module radioélectrique (5) est conçu pour la communication par voie radioélectrique avec une commande à distance radioélectrique et/ou avec le module radioélectrique d'un autre arrangement d'entraînement.

3. Mécanisme d'entraînement selon la revendication 1 ou 2, **caractérisé en ce que** le module radioélectrique (5) est réalisé sous la forme d'un module horloge radiopiloté pour la réception par voie radioélectrique d'informations de temps en vue de communiquer l'heure actuelle.

4. Mécanisme d'entraînement selon la revendication 3, **caractérisé en ce que** le module radioélectrique (5) est réalisé sous la forme d'un module DCF pour la réception d'un signal DCF.

5. Mécanisme d'entraînement selon l'une des revendications précédentes, **caractérisé en ce que** le module radioélectrique (5) peut être désactivé au moyen du module de commande (4) de telle sorte qu'à l'état désactivé, le fonctionnement du découpage n'a pour l'essentiel aucun effet sur le module radioélectrique (5), de préférence de telle sorte qu'un circuit oscillant HF du module radioélectrique (5) prévu pour le fonctionnement radioélectrique est déconnecté de son circuit de commande lorsque le module radioélectrique (5) est à l'état désactivé.

6. Mécanisme d'entraînement selon la revendication 5, **caractérisé en ce que** le module de commande (4) active le module radioélectrique (5) exclusivement lorsque l'alimentation à découpage (7) se trouve à l'état de veille et pour le reste le désactive.

7. Mécanisme d'entraînement selon l'une des revendications précédentes, **caractérisé en ce que** le module radioélectrique (5) reçoit ou émet les informations de commande dans des cycles de réception et/ou d'émission (9), le cas échéant en liaison avec le module de commande (4), **en ce qu'**au moins un temps de pause (10) sans transmission de données est prévu au sein d'un cycle (9) et **en ce que** le module de commande (4) commande brièvement l'alimentation à découpage (7) à l'état opérationnel pendant le temps de pause (10), de préférence de sorte que l'alimentation à découpage (7) qui se trouve à l'état opérationnel recharge en conséquence l'accumulateur d'énergie (9) pendant le temps de pause (10).

8. Mécanisme d'entraînement selon la revendication 4 et éventuellement selon l'une des revendications 5 à 7, le signal DCF présentant un signal porteur comprenant un certain nombre d'impulsions de données (11) binaires modulées selon un cycle d'une seconde, lesquelles peuvent être reçues dans un cycle de réception (9), un temps de pause (10) étant prévu entre deux impulsions de données (11), **caractérisé en ce que** le module de commande (4) commande l'alimentation à découpage (7) pendant le cycle de réception (9) de l'état de veille à l'état opérationnel au moins sur une partie du temps de pause (10) et dans l'état de veille pour le reste.

9. Mécanisme d'entraînement selon la revendication 8, **caractérisé en ce que** pendant le temps de pause (10), l'alimentation à découpage (7) qui se trouve à l'état opérationnel recharge l'accumulateur d'énergie (8).

10. Mécanisme d'entraînement selon l'une des revendications précédentes, **caractérisé en ce que** le mécanisme d'entraînement est réalisé sous la forme d'un enrouleur de sangle pour enrouler la sangle d'un volet roulant ou sous la forme d'un moteur tubulaire pour être installé dans l'arbre d'enroulement d'un volet roulant.
